# EUROPÄISCHE PATENTSCHRIFT

(11) **EP 3 284 663 B1**
(45) Veröffentlichungstag und Bekanntmachung des Hinweises auf die Patenterteilung: **07.11.2018**
(21) Anmeldenummer: 17001372.6
(22) Anmeldetag: 10.08.2017
(51) Int. Cl.: B62J 7/08, B62J 1/08

(54) **ERGONOMISCHER SATTEL FÜR ZWEIRÄDER ZUR DRUCKENTLASTUNG UND ANPASSUNG AN DEN SITZKNOCHENABSTAND**
ERGONOMIC SADDLE FOR BICYCLES FOR REDUCING PRESSURE AND ADAPTION TO SEAT BONE DISTANCE
SUPPORT ERGONOMIQUE POUR DEUX ROUES DESTINÉ À LA DÉTENTE ET À L'ADAPTATION AUTOMATIQUE DE L'ÉCART DU PLANCHER PELVIEN

(30) Priorität: 17.08.2016 DE 202016005063 U
(43) Veröffentlichungstag der Anmeldung: 21.02.2018
(73) Patentinhaber: SQlab GmbH, 82024 Taufkirchen (DE)
(72) Erfinder: Hild, Tobias, 82024 Taufkirchen (DE); Fischer, Michael, 84137 Vilsbiburg (DE)
(74) Vertreter: Koelle, Alexander

(56) Entgegenhaltungen:
- WO-A1-94/10025
- WO-A2-2007/063525
- CN-U- 201 777 326

## Beschreibung

Die Erfindung betrifft einen Sattel für ein Zweirad, bestehend aus einer herkömmlichen harten Sattelschale und einem herkömmlichen Sattelgestell mit wenigstens zwei Streben. Unter einem Zweirad wird ein lenkergeführtes Fahrrad, wie ein übliches Fahrrad, ein Mountain-Bike, ein Rennrad, ein Motorrad und ein Mofa, aber auch ein Motorrad mit zwei hinteren Antriebsrädern und einem Vorderrad verstanden.

Bekannt sind herkömmliche Ausführungsformen eines Sattels für Zweiräder, wobei insbesondere bei Sätteln für Rennräder die Form bislang so gestaltet wurde, dass das Körpergewicht auf dem Dammbereich oder dem Schambein und weniger auf den Sitzknochen lastet.

Nachteil dieser Sattelformen ist, dass bei Männern auf den Dammbereich und bei Frauen im Bereich des Schambeins ein zu hoher Druck lastet. Es besteht die Gefahr, dass beim Mann der hohe Druck im Dammbereich negative Auswirkungen auf die sexuelle Leistungsfähigkeit des Mannes haben kann. Bei Frauen liegt das Schambein meist etwas tiefer als beim Mann, so dass dieses meistens schmerzhaft auf die Sattelnase drückt. In der Vergangenheit gab es verschiedene Lösungsansätze verschiedener Sattelhersteller, den Druck im Dammbereich oder im Bereich des Schambeins zu senken, z.B. durch die Verwendung einer weichen Sattelnase, beispielsweise durch die Verwendung von Gel oder von Aussparungen und Löchern im Sattel. Sättel mit derartigen Merkmalen sind bereits aus EP 1 394 025 und aus US 5 356 205 bekannt geworden. Mit diesen Sätteln kann jedoch eine noch nicht ausreichende Druckentlastung im Dammbereich bzw. Schambeinbereich erreicht werden. Weitere besonders gefederte oder besonders gepolsterte Fahrradsättel sind aus DE 295 20 969 U1, DE 20 2015 104 470 U1 und CN 103 373 412 A bekannt. Dokument WO2007/063525A2 offenbart den Oberbegriff von Anspruch 1.

Aufgabe der vorliegenden Erfindung ist es, den Druck bei Männern im Dammbereich und/oder bei Frauen im Bereich des Schambeins zu senken und diese Druckstellen automatisch zu entlasten, ohne dabei jedoch auf die bislang bekannten Lösungsansätze zurückzugreifen. Ferner ist Aufgabe der Erfindung, die durch die Tretbewegung wechselseitig auftretenden Druckspitzen an den Sitzknochen zu minimieren und Rückenbeschwerden vorzubeugen. Aufgabe der Erfindung ist ferner einen möglichst stabilen und besonders leichten Fahrradsattel zu erhalten, der auch möglichst kostengünstig herstellbar ist.

Dazu wurden mehrere hundert Personen aller Altersstufen und beider Geschlechts genau vermessen, insbesondere wurde der Abstand der Sitzknochen mittels eines eigens hierfür entwickelten Messverfahrens gemessen. Es zeigte sich, dass der Sitzknochenabstand unabhängig von Geschlecht, Körpergröße und Körpergewicht um bis zu maximal 8 cm abweicht. Ein weiterer Faktor ist die Höhe des Schambeinbogens aus welcher sich der Winkel errechnet, in dem die Schambeine zum Schambeinbogen in Abhängigkeit vom Sitzknochenabstand zusammenlaufen. Hinzu kommen ein unterschiedlicher Knochenbau und eine unterschiedliche Beckenbodenmuskulatur. Darüber hinaus nimmt das Schmerzempfinden an den Sitzknochen mit zunehmender Fahrzeit und mit einer gewissen Abhärtung ab. Insbesondere zu Saisonbeginn ist das Schmerzempfinden an den Sitzknochen höher als in der Saisonmitte. Aufgrund dieser sehr individuellen und von außen nicht ohne weiteres erkennbaren Körpermerkmale war es bis jetzt noch nicht möglich, einen Sattel herzustellen, der unabhängig von Geschlecht, Körpergröße und Körpergewicht den Druck auf den vorerwähnten Druckstellen senkt. Mit den Erfindungen nach DE 20 2004 014 467.0, DE 20 2005 013 749.9 und EP 2 003 046 B1 sowie EP 2 965 974 A1 war es möglich, die erwähnte Entlastung auf den vorerwähnten Druckstellen zu senken und eine individuelle Einstellung auf die Körpermerkmale des Fahrers zu gewährleisten. Die vorliegende Erfindung ist eine Weiterentwicklung von DE 20 2004 014 467.0 U, DE 20 2005 013 749.9 U, DE 20 2007 008 321.1 U und EP 2 003 046 B1.

Komfort- und druckentlastende Faktoren sind grundsätzlich das Polster, das Bezugsmaterial, die Größe der Auflagefläche, die Form der Auflagefläche und die Federung. Federungen von Sätteln wurden bislang über zwei Federn aus Federstahl oder Elastomeren im hinteren Bereich des Sattels realisiert. Eine weitere Möglichkeit bestand darin die Materialelastizität und - anpassungsfähigkeit zu nutzen. Bei einem weicheren Material der Sattelschale begann die Sattelschale aber sich in Längsrichtung zu verbiegen, was keinen Vorteil für die Sitzknochen brachte, die im hinteren Teil des Sattels relativ weit außen auf dem Sattel aufliegen. Die Verwendung von unterschiedlich harten Materialien in der Sattelschale hat sich lange Zeit als die beste Methode herausgestellt, die Elastizität und Anpassungsfähigkeit der Sattelschale so zu beeinflussen, dass an bestimmten Stellen ein Nachgeben oder Verbiegen möglich ist und an anderen Stellen nicht. Messungen mittels einer elektronischen Druckmessfolie auf dem Sattel eines stationären Fahrrads über einen längeren Zeitraum haben nicht nur die Druckverteilung an den Sitzknochen und im Dammbereich bzw. im Schambeinbereich ergeben, sondern auch, dass die Druckspitzen an den Sitzknochen auftreten und in derselben Frequenz wie die Trittfrequenz extrem von der linken auf die rechte Sattelseite und wieder zurück wandern. Ein steifer Sattel wirkt dieser Beckenbewegung nur unnötig entgegen. Kann der Sattel jedoch - ausgelöst durch die Tretbewegung - kippen, so lassen sich die wechselseitig auftretenden Druckspitzen an den Sitzknochen minimieren.

Ferner hilft die Kippbewegung des Sattels Rückenleiden und Rückenbeschwerden vorzubeugen und zu verhindern, da die Wirbel gezielt und kontrolliert bewegt werden.

Durch kontrollierte Bewegung erfahren die Bandscheiben, die als Puffer zwischen den Wirbelkörpern sitzen, Druck und Zug und werden so mit Nährstoffen versorgt. Durch Entlastung gewinnen die Bandscheiben wieder optimale Höhe und können so maximale Druckabsorption leisten.

Die seitliche Bewegung des Beckens während dem Radfahren sorgt für eine Mobilisierung der Bandscheiben, vor allem im Bereich der Lendenwirbel, die am häufigsten von Beschwerden betroffen sind. Bei extremen Fahrmanövern, z.B. im Gelände, wird das Fahrrad oft in eine starke Schräglage bei nahezu aufrechtem Oberkörper gedrückt. Die Kippbewegung des Sattels verhindert in diesem Fall eine Überstreckung der Wirbel, da der Sattel der extremen Bewegung folgt. Nach einer ausgiebigen Fahrt und einer dementsprechenden Erschöpfung neigt der Radfahrer dazu, vor allem bergauf, "aus dem Rücken" heraus zu arbeiten. Diese wechselseitigen Pumpbewegungen können ebenfalls zu einer Überlastung der Wirbel/Bandscheiben führen. Videoanalysen haben ergeben, dass nach einer Fahrt von ca. 40 Minuten und einer dementsprechenden Erschöpfung die Bewegung der Wirbelsäule immer stärker wird und in einen Bereich gerät, der zu stark belastend ist und zu einer Überstreckung der Wirbel führt.

Einerseits sollen also durch die Ermöglichung einer seitlichen Kippbewegung des Sattels bei eher statischem Geradeausfahren auf befestigter Straße die Wirbel und das Becken kontrolliert bewegt werden. Andererseits soll durch eine kontrollierte seitliche Kippbewegung des Sattels eine Überstreckung der Wirbel vermieden werden.

Aus GB 2 045 703 A war bereits ein Fahrradsattel bekannt, der eine seitliche Kippbewegung ermöglicht, allerdings erfolgte die Kippbewegung hier nicht kontrolliert und/oder in einem bestimmten Rahmen begrenzt. Vor allem mit der Erfindung nach EP 2 003 046 B1 konnte durch die kontrollierte seitliche Kippbewegung des Sattels eine erhebliche Druckentlastung an den Sitzknochen erzielt werden. Ein anderer Sattel ist aus EP 1 495 952 A1 bekannt, bei dem jedoch auch die seitliche Kippbewegung nicht kontrollierbar und/oder begrenzt war.

Die Aufgabe der vorliegenden Erfindung wird erfindungsgemäß durch die kennzeichnenden Merkmale des ersten Schutzanspruchs gelöst. Durch die Merkmale der Unteransprüche wird die Erfindung vorteilhaft ausgestaltet bzw. modifiziert. Der Sattel besteht aus einem handelsüblichen Gestell mit zwei Streben 2, 3 und einer herkömmlichen und handelsüblichen harten Sattelschale 1 mit oder ohne Polsterung. Vorteilhaft besteht das Material der Streben 2, 3 aus Kohlefaser, Titan, Stahl oder einem anderen Faserverbundwerkstoff.

Diese Elastizität und Anpassungsfähigkeit des Sattels durch die Kippbewegung wird auch Flex genannt. Die Auflageflächen nehmen automatisch den Winkel ein, der die größte Auflagefläche bietet und somit die geringste Druckbelastung zwischen der Auflagefläche und den Sitzknochen gewährleistet.

Die sich im hinteren Bereich 5 des Fahrradsattels im Bereich 6 kreuzenden Sattelstreben 2, 3 ermöglichen im Zusammenwirken eine seitliche Kippbewegung der Sattelschale, vorzugsweise im Bereich von +/- 3° bis 14° zur Horizontalen. Diese Kippbewegung bzw. der sog. Flex wird durch die sich im hinteren Bereich 5 kreuzenden Streben 2, 3 erreicht, die jeweils auf der anderen Sattelseite als derjenigen an der sie vorne an der Sattelnase 4 befestigt sind über die hinteren Anbindungen 7, 8 mit der Sattelschale verbunden sind. Die Streben 2, 3 kreuzen sich im Bereich 6, aber sie berühren sich nicht. Sie sind auch in diesem Bereich nicht miteinander verbunden. Kommt Gewicht auf die Sattelschale, so biegen sich die Sattelstreben 2, 3 nach unten, wodurch die Strebenlänge größer und die Sattelschale 1 gespannt wird. Dadurch ergibt sich eine progressive Federkennlinie hinsichtlich des Sattel-Streben-Gesamtsystems und die Sattelschale 1 biegt sich nicht zu weit durch. Um den Komfort zu erhöhen, kann an den Anbindungen 7, 8 auch je ein Elastomer zwischen den Streben 2, 3 und der Sattelschale 1 auswechselbar vorgesehen werden.

Über verschiedene Materialhärten und verschiedene Materialien sowie Durchmesser, Windstärken und Faserauslegung der Sattelstreben 2, 3 ist es möglich, die Elastizität, die beidseitig gleiche Kippbewegung und somit die Anpassungsfähigkeit der Auflageflächen 9 des Sattels einzustellen und zu garantieren. Dadurch ist es außerdem auch möglich den Flex auf das Körpergewicht des Fahrers und seine Sitzposition entsprechend anzupassen und einzustellen. Der Flex ist somit kontrollierbar.

In der Zeichnung zeigt:

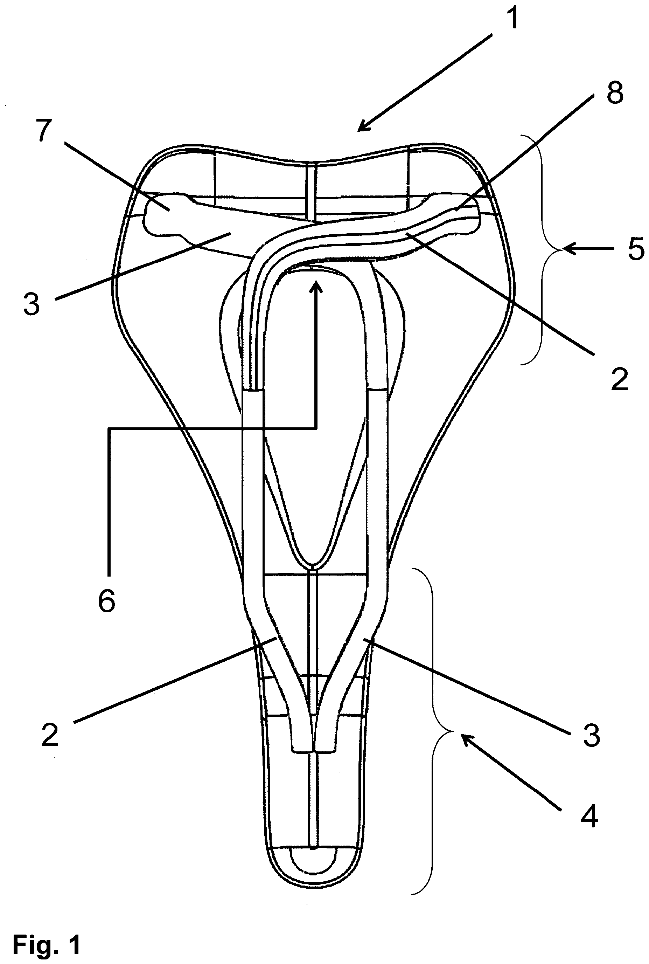

Fig. 1 eine Ansicht des Sattels mit Sattelschale 1 von unten, mit den sich im Bereich 6 kreuzenden Streben 2, 3 und den Anbindungen 7, 8 im hinteren Bereich 5

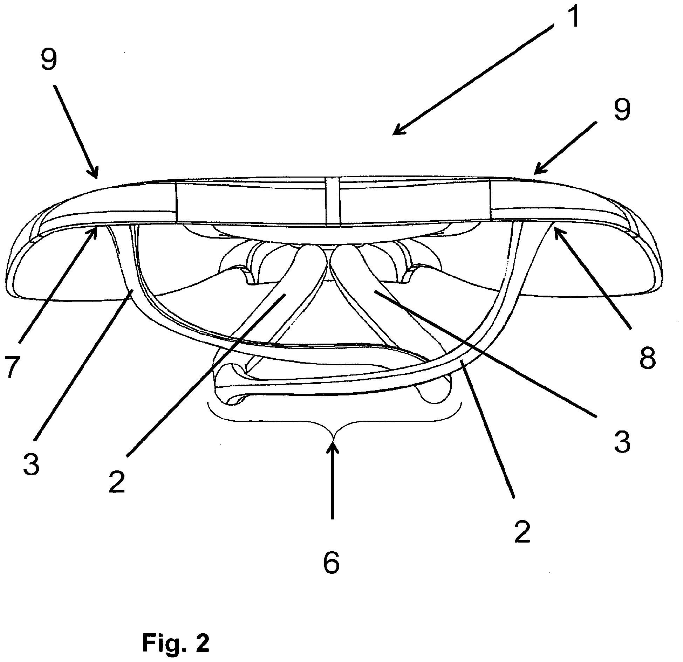

Fig. 2 eine Draufsicht von hinten mit den sich im Bereich 6 kreuzenden Streben 2, 3 und den Anbindungen 7, 8 an die Sattelschale sowie den Auflageflächen für die Sitzknochen 9

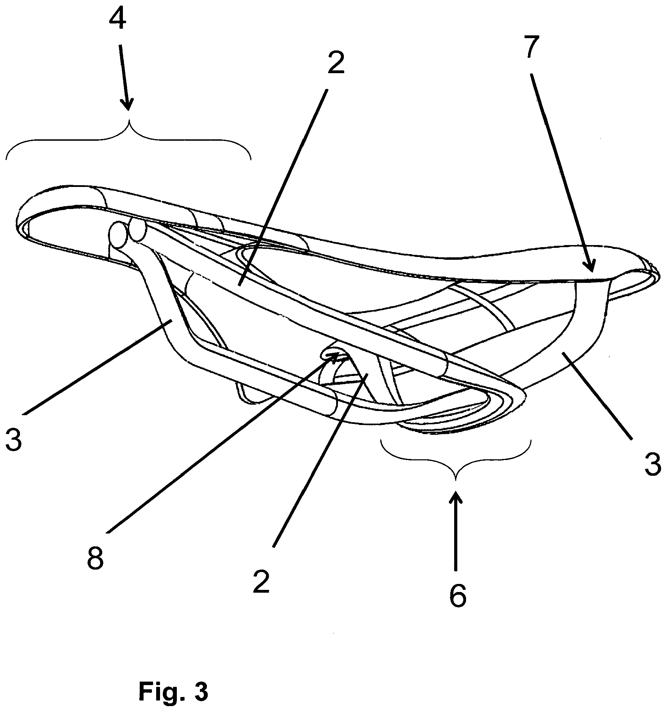

Fig. 3 eine perspektivische Ansicht von unten mit den sich im Bereich 6 kreuzenden Streben 2, 3 und den Anbindungen 7, 8 an die Sattelschale.

### Bezugszeichenliste

- 1: Sattelschale
- 2: Linke Strebe
- 3: Rechte Strebe
- 4: Vorderer Sattelbereich, Sattelnase
- 5: Hinterer Sattelbereich
- 6: Bereich der sich kreuzenden linken und rechten Sattelstrebe im hinteren Sattelbereich
- 7: Linke hintere Anbindung der rechten Sattelstrebe 3
- 8: Rechte hintere Anbindung der linken Sattelstrebe 2
- 9: Auflagefläche für die Sitzknochen

## Patentansprüche

1. Sattel für Zweiräder, insbesondere für Fahrräder, bestehend aus wenigstens einer Sattelschale (1), mit oder ohne Polsterung, und mit zwei Streben (2, 3), eine linke Strebe (2) und eine rechte Strebe (3), die sowohl an der Sattelnase (4) als auch im hinteren Sattelbereich (5) mit der Sattelschale (1) verbunden sind, **dadurch gekennzeichnet, dass** sich die beiden Streben (2, 3) im hinteren Sattelbereich (5) einmal kreuzen (6), ohne sich zu berühren oder miteinander verbunden zu sein, so dass sie jeweils auf der anderen Sattelseite als derjenigen an der sie vorne an der Sattelnase befestigt sind über die hinteren Anbindungen (7, 8) mit der Sattelschale (1) verbunden sind.

2. Sattel nach Anspruch 1, **dadurch gekennzeichnet, dass** die beiden Auflageflächen für die Sitzknochen (9) im hinteren Sattelbereich (5) die höchsten Erhebungen des Sattels darstellen, insbesondere gegenüber der Sattelnase (4).

3. Sattel nach Anspruch 1 oder 2, **dadurch gekennzeichnet, dass** zwischen den beiden Auflageflächen (9) eine Vertiefung (10) vorgesehen ist.

4. Sattel nach einem der Ansprüche 1 bis 3, **dadurch gekennzeichnet, dass** zwischen den beiden Streben (4, 5) an deren Ende im hinteren Sattelbereich (5) und den hinteren Anbindungen (7, 8) an der Sattelschale (1) jeweils ein elastisches Dämpfungselement vorgesehen ist, welches vorzugsweise lösbar und somit auswechselbar ist.

## Claims

1. Saddle for two-wheeled vehicles, in particular bicycles, comprising at least one saddle shell (1) with or without cushioning, and with two struts (2, 3), a left strut (2) and right strut (3) which are connected to both the saddle nose (4) as well as the saddle shell (1) in the rear saddle area (5), **characterised in that** the two struts (2, 3) cross once (6) in the rear saddle area (5) without coming into contact with or being connected to each other so that they are each connected to the saddle shell (1) via the rear connections (7, 8) on the other side of the saddle to the one on which they are attached at the front on the saddle nose.

2. Saddle according to claim 1 **characterised in that** the two support surfaces for the seat bones (9) in the rear saddle area (5) constitute the highest elevations of the saddle, in particular relative the saddle nose (4).

3. Saddle according to claim 1 or 2 **characterised in that** a recess (10) is provided between the two support surfaces (9).

4. Saddle according to any one of claims 1 to 3 **characterised in that** between the two struts (4, 5) at their ends in the rear saddle area (5) and the rear connections (7, 8) on the saddle shell (1) an elastic damping element is respectively provided which is preferably detachable and thus replaceable.

## Revendications

1. Selle, destinée à des véhicules à deux roues, notamment à des bicyclettes, constituée d'au moins une coque de selle (1) dotée ou non d'un rembourrage et de deux supports (2, 3), un support gauche (2) et un support droite (3), qui aussi bien sur le nez de selle (4) qu'également dans la région arrière (5) de la selle sont reliées avec la coque de selle (1), **caractérisée en ce que** les deux supports (2, 3) se croisent (6) une fois dans la région arrière (5) de la selle, sans se toucher, ni être assemblées l'une à l'autre, de sorte à être reliées par l'intermédiaire des attaches (7, 8) arrière avec la coque de selle (1), respectivement sur le côté de selle différent de celui sur lequel elles sont fixées sur le nez de selle.

2. Selle selon la revendication 1, **caractérisée en ce que** les deux surfaces d'appui pour les ischions (9) représentant dans la région arrière (5) de la selle les élévations les plus hautes de la selle, notamment par rapport au nez de selle (4).

3. Selle selon la revendication 1 ou 2, **caractérisée en ce qu'**entre les deux surfaces d'appui (9), il est prévu un renfoncement (10).

4. Selle selon l'une quelconque des revendications 1 à 3, **caractérisée en ce qu'**entre les deux supports (4, 5), sur leur extrémité dans la région arrière (5) de la selle et les attaches arrière (7, 8) sur la coque de selle (1), il est prévu respectivement un élément amortisseur élastique, lequel est de préférence amovible et donc interchangeable.
